# FASCICULE DE BREVET EUROPEEN

(11) **EP 3 896 361 B1**
(45) Date de publication et mention de la délivrance du brevet: **05.10.2022**
(21) Numéro de dépôt: 21168308.1
(22) Date de dépôt: 14.04.2021
(51) Int. Cl.: F24S 25/61, E04D 1/30, E04D 13/147, H02S 20/23, F24S 25/615, F24S 25/613

(54) **PROCÉDÉ DE POSE D'UN DISPOSITIF DE FIXATION D'UN PANNEAU PHOTOVOLTAÏQUE EN SURTOITURE ET DISPOSITIF DE FIXATION POUR LA POSE EN SURTOITURE D'UN PANNEAU**
VERFAHREN ZUM INSTALLIEREN EINER BEFESTIGUNGSVORRICHTUNG FÜR EIN FOTOVOLTAIKPANEEL AUF EINEM DACH UND BEFESTIGUNGSVORRICHTUNG ZUM INSTALLIEREN EINES PANEELS AUF EINEM DACH
METHOD FOR INSTALLING A DEVICE FOR ATTACHING AN OVER-ROOF PHOTOVOLTAIC PANEL AND ATTACHMENT DEVICE FOR OVER-ROOF INSTALLATION OF A PANEL

(30) Priorité: 14.04.2020 FR 2003737
(43) Date de publication de la demande: 20.10.2021
(73) Titulaire: Cetih Carquefou, 44470 Carquefou (FR)
(72) Inventeur: HUMBLOT, Rémi, 44220 Couëron (FR); LORET, Julien, 44170 Marsac sur Don (FR)
(74) Mandataire: Jacobacci Coralis Harle

(56) Documents cités:
- DE-U1-202005 019 628
- US-A1- 2017 356 189
- US-A1- 2019 131 917
- US-B1- 8 549 793
- US-B2- 8 826 618
- US-B2- 10 472 828

## Description

### Domaine technique de l'invention

La présente invention concerne le domaine technique de la pose des panneaux photovoltaïque sur une toiture.

Elle concerne plus particulièrement un procédé de pose d'un dispositif de fixation d'un panneau photovoltaïque en sur-toiture ; et elle concerne encore un dispositif de fixation pour la pose en sur-toiture d'un panneau de ce type.

### Etat de la technique

La pose des panneaux photovoltaïques ou solaires est souvent réalisée sur les toits des habitations car la surface est disponible ; de plus, sous nos latitudes (45°-50°), la pente du toit favorise le rendement du soleil sauf en cas de mauvaise orientation.

La pose de ces panneaux solaires se fait soit en démontant la couverture, soit en laissant celle-ci en place.

L'invention vise la pose des panneaux photovoltaïques sur des couvertures faites d'éléments identiques à recouvrement partiel, en particulier des tuiles.

La couverture est souvent faite de tuiles posées sur une charpente et conformées pour obtenir une étanchéité par un recouvrement partiel des bords des tuiles dans l'axe horizontal et l'axe du rampant. Lors de la pose des tuiles, on commence par la rangée du bas où la tuile J vient partiellement couvrir la tuile J-1, cette tuile J étant partiellement couverte par la tuile J+1.

Cette rangée de tuiles J, J+1+...Jn est partiellement recouverte par la rangée K située au-dessus.

Pour une pose des panneaux, il est nécessaire d'utiliser un dispositif de fixation qui se fixe sous les tuiles et qui offre un appui pour le panneau au-dessus des tuiles.

On se fixe donc sur la charpente et en particulier sur les voliges ou les liteaux de cette charpente.

Ce dispositif de fixation doit être conformé pour présenter un moyen d'ancrage du panneau, ce moyen d'ancrage se trouvant au-dessus des tuiles.

Pour ce faire, le dispositif de fixation présente une platine de fixation sur une volige ou un liteau ; de cette platine une lame s'étend dans le sens du rampant vers le bas, adaptée pour passer sous la tuile et pour ressortir à l'extérieur au-dessus de la tuile du rang sous-jacent.

Le procédé de pose comprend donc une première étape consistant à retirer une tuile pour un accès à la charpente, puis, lors d'une seconde étape, à fixer sur cette charpente une platine support d'un corps dit de déport sur lequel est fixé un élément d'appui visible au-dessus de la couverture pour la fixation d'un panneau photovoltaïque. Après avoir mis en place ce corps de déport, la tuile préalablement enlevée est remise en place et on peut fixer le panneau sur l'élément d'appui visible.

Pour permettre le passage intérieur/extérieur de la lame, le bord arrière de la tuile doit généralement être limé pour réduire localement ce bord arrière.

Mais on crée alors un défaut d'étanchéité qui peut permettre aux bourrasques de pluie de s'infiltrer à contre-courant. De plus, un moment est créé du fait de la distance entre la force exercée par le panneau et le point de fixation de la platine.

Des dispositifs de l'art antérieur sont connus par exemple de US 10472828 B2 et US 8826618 B2.

L'invention vise à proposer une nouvelle solution de fixation d'un panneau photovoltaïque sur une toiture.

### Présentation de l'invention

Afin de remédier à l'inconvénient précité de l'état de la technique, la présente invention propose un procédé de pose d'un dispositif de fixation selon la revendication 1.

D'autres caractéristiques non limitatives et avantageuses du procédé conforme à l'invention, prises individuellement ou selon toutes les combinaisons techniquement possibles, sont les suivantes :
- selon le procédé de pose du dispositif de fixation on peut emboutir la feuille rigide pour former un tronc de cône qui est centré sur la tige filetée ;
- selon le procédé de pose on peut fixer la feuille rigide de manière à ce qu'elle soit solidaire uniquement de la tige filetée et libre mécaniquement par rapport à la charpente.

La présente invention concerne encore un dispositif de fixation d'un panneau photovoltaïque selon la revendication 4.

La face apparente de la feuille rigide peut présenter sur son bord supérieur et ses deux bords latéraux une surépaisseur ou nervure.

La feuille rigide peut présenter sur sa face apparente une forme en tronc de cône.

La feuille rigide peut être fixée sur la tige filetée par des moyens d'immobilisation tels des écrous et des joints/rondelles qui la rendent solidaire de la tige filetée et libre mécaniquement de la charpente.

Le dispositif de fixation peut comprendre une entretoise tubulaire destinée à créer un appui pour la feuille rigide sur la tige filetée.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres, et dans les limites définies par les revendications.

### Description détaillée de l'invention

De plus, diverses autres caractéristiques de l'invention ressortent de la description annexée effectuée en référence aux dessins qui illustrent des formes, non limitatives, de réalisation de l'invention et où :

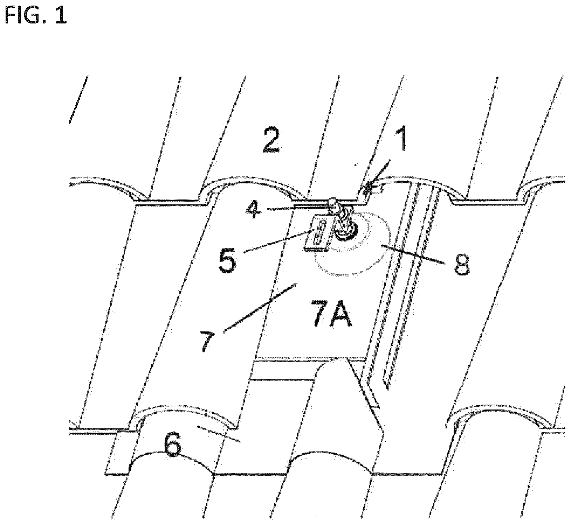

- la figure 1est une vue en perspective de dessus d'une forme de réalisation possible d'un dispositif de fixation conforme à l'invention ;

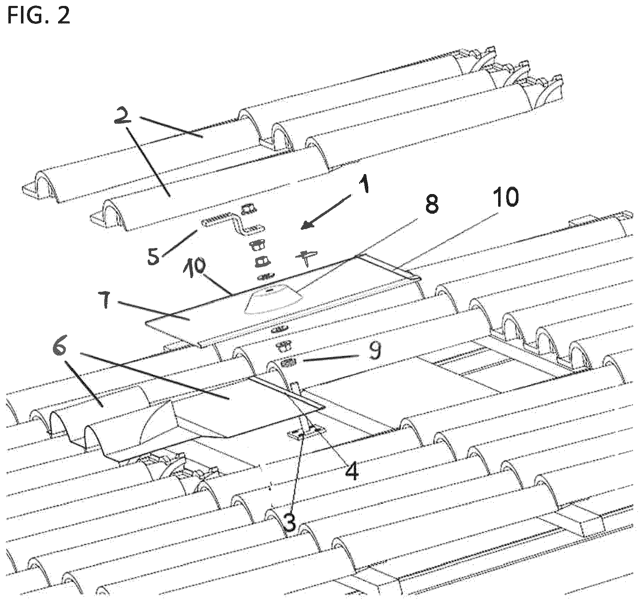

- la figure 2 est une vue éclatée du dispositif de fixation de la figure 1 ;

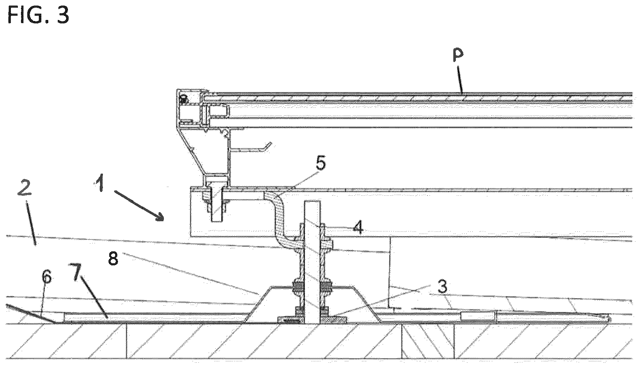

- la figure 3 est une vue latérale du dispositif de fixation des figures 1 et 2.

En se reportant aux dessins on voit un dispositif 1 de fixation pour la pose d'un panneau solaire du type photovoltaïque P au-dessus d'une toiture du type formée de pièces 2 de couverture à recouvrement partiel. Le recouvrement partiel se fait selon les deux axes principaux de la pièce de couverture.

Pour la mise en place de ce dispositif de fixation, le procédé comprend une première étape consistant à retirer une pièce 2 de couverture pour un accès à une charpente, et une seconde étape consistant à fixer sur la charpente une platine support 3 d'un corps 4 dit de déport sur lequel apparait un élément 5 d'appui qui, visible au-dessus de la couverture, est utilisé pour la fixation d'un panneau photovoltaïque P.

Selon l'invention, on se munit d'une platine support 3 dont la face tournée vers le haut présente une tige 4 filetée sensiblement normale à cette platine et après avoir fixé la platine support sur la charpente, d'une part, on pose au moins une bande 6 souple d'étanchéité sur la surface préalablement découverte en réalisant un recouvrement selon les deux axes de la toiture, et d'autre part, au-dessus de cette bande 6 souple on applique une feuille 7 rigide emboutie avec un trou pour le passage de la tige 4 filetée ; et sur cette tige 4 filetée on fixe l'élément 5 d'appui visible précité. La feuille 7 rigide a une étendue moindre que la bande 6 souple.

La platine support 3 est fixée sur les voliges ou les liteaux constitutifs de la charpente.

La feuille 7 rigide emboutie est déformée pour faire apparaitre une forme 8 en tronc de cône sur sa face tournée vers le haut, et la tige 4 filetée présente un appui pour le tronc de cône qui est appliqué sur cet appui au moyen d'un écrou, et des joints assurent l'étanchéité au serrage. Par exemple, on emboutit la feuille 7 rigide pour former le tronc de cône qui est centré sur la tige 4 filetée.

Pour positionner cet appui, une entretoise 9 tubulaire est glissée sur la tige 4 filetée. En raison des écrous et des joints, l'eau ne peut donc pas s'infiltrer le long de la tige filetée.

La face 7A apparente de la feuille 7 rigide présente sur son bord supérieur et ses deux bords latéraux une surépaisseur 10 ou nervure par exemple obtenue par pliage des bords correspondants de la feuille rigide.

Cette disposition limite les risques de remontées d'eau.

La rotation de cette feuille rigide est empêchée par un moyen approprié.

La feuille 7 rigide peut être en aluminium, en zinc ou en acier inoxydable ou en cuivre ou encore en matière dite plastique.

La bande 6 d'étanchéité souple peut être une bande de plomb qui est malléable ou en matière synthétique.

L'élément 5 d'appui visible est fixé à l'extrémité de la tige filetée verrouillé par exemple par deux écrous.

Par exemple on fait appel à une lame courte pliée en Z de sorte que le moment qu'exerce le poids du panneau est faible.

Il importe peu que cette méthode affecte l'esthétique de la couverture car cette partie du toit est sous les panneaux et ne se voit pas.

La feuille 7 rigide qui est fixée à la tige 4 filetée par l'intermédiaire des rondelles et des écrous, est libre mécaniquement vis-à-vis de la charpente. En effet, cette liberté mécanique permet à la feuille 7 rigide de « suivre » les mouvements de la tige 4 filetée liés aux dilatations thermiques, aux vibrations de la fixation sur le panneau avec le vent. Cette fonction est importante car elle évite tout déplacement différentiel entre la tige 4 filetée et la feuille 7 rigide. On fixe la feuille 7 rigide de manière à ce qu'elle soit solidaire uniquement de la tige 4 filetée et libre mécaniquement par rapport à la charpente.

## Revendications

1. Procédé de pose d'un dispositif (1) de fixation pour la fixation d'un panneau photovoltaïque (P) au-dessus d'une toiture du type formée de pièces (2) de couverture à recouvrement partiel comprenant une première étape consistant à retirer une pièce de couverture pour un accès à une charpente et une seconde étape consistant à fixer sur la charpente une platine (3) support d'un corps (4) dit de déport sur lequel apparait un élément (5) d'appui visible au-dessus de la couverture utilisé pour la fixation du panneau photovoltaïque (P), ce procédé étant tel qu'on se munit de la platine (3) support dont la face tournée vers le haut présente une tige (4) filetée sensiblement normale à cette platine (3) support, et après avoir fixé la platine (3) support sur la charpente, d'une part, on pose au moins une bande (6) souple d'étanchéité sur la surface découverte réalisant le recouvrement selon les deux axes de la toiture, ce procédé étant **caractérisé en ce que** d'autre part, au-dessus de cette bande (6) souple on applique une feuille (7) rigide emboutie avec un trou pour le passage de la tige (4) filetée et sur cette tige (4) filetée on fixe l'élément (5) d'appui visible précité.

2. Procédé de pose d'un dispositif (1) de fixation selon la revendication 1 **caractérisé en ce qu'**on emboutit la feuille (7) rigide pour former un tronc (8) de cône qui est centré sur la tige (4) filetée.

3. Procédé de pose d'un dispositif (1) de fixation selon l'une quelconque des revendications 1 ou 2 **caractérisé en ce qu'**on fixe la feuille (7) rigide de manière à ce qu'elle soit solidaire uniquement de la tige (4) filetée et libre mécaniquement par rapport à la charpente.

4. Dispositif (1) de fixation d'un panneau photovoltaïque (P) posé au-dessus d'une toiture à éléments (2) de couverture a recouvrement partiel, le dispositif comprenant une platine (3) support dont la face tournée vers le haut présente une tige (4) filetée sensiblement normale à cette platine (3) support, au moins une bande (6) d'étanchéité d'étendue suffisante pour permettre un recouvrement partiel avec les éléments (2) de couverture adjacents, le dispositif étant **caractérisé en ce qu'**il comprend une feuille (7) rigide emboutie fixée uniquement sur la dite tige (4) filetée pour être libre mécaniquement de la charpente et, sur laquelle tige (4) filetée est fixé, à son extrémité, un élément (5) d'appui pour ledit panneau photovoltaïque (P).

5. Dispositif (1) de fixation selon la revendication 4 **caractérisé en ce que** la face (7A) apparente de la feuille (7) rigide présente sur son bord supérieur et ses deux bords latéraux une surépaisseur ou nervure (10).

6. Dispositif (1) de fixation selon la revendication 4 **caractérisé en ce que** la feuille (7) rigide présente sur sa face (7A) apparente une forme (8) en tronc de cône.

7. Dispositif (1) de fixation selon la revendication 4 **caractérisé en ce que** la feuille (7) rigide est fixée sur la tige (4) filetée par des moyens d'immobilisation tels des écrous et des joints/rondelles qui la rendent solidaire de la tige (4) filetée et libre mécaniquement de la charpente.

8. Dispositif (1) de fixation selon la revendication 4 **caractérisé en ce qu'**il comprend une entretoise (9) tubulaire destinée à créer un appui pour la feuille (7) rigide sur la tige (4) filetée.

## Patentansprüche

1. Verfahren zum Installieren einer Befestigungsvorrichtung (1) für die Befestigung einer Photovoltaik-Platte (P) auf einem Dach, das aus Dachdeckteilen (2) mit teilweiser Überdeckung gebildet ist, mit einem ersten Schritt, der darin besteht, ein Dachdeckteil zu entfernen, um an den Dachstuhl heranzukommen, und einem zweiten Schritt, der darin besteht, auf dem Dachstuhl eine Trägerplatine (3) für einen abgesetzten Körper (4) zu befestigen, auf dem ein oberhalb der Dachabdeckung sichtbares Stützelement (5) erscheint, das für die Befestigung der Photovoltaik-Platte (P) verwendet wird, wobei das Verfahren so ausgelegt ist, daß man zunächst die Trägerplatine (3) nimmt, deren nach oben gerichtete Seite einen zu dieser Trägerplatine (3) im Wesentlichen senkrechten Gewindestift aufweist, und man, nachdem die Trägerplatine (3) auf dem Dachstuhl befestigt worden ist, einerseits mindestens ein weiches Dichtungsband (6) auf die freigelegte Oberfläche aufbringt und dabei eine Überdeckung in den beiden Achsen des Dachs erzeugt, wobei dieses Verfahren **dadurch gekennzeichnet ist, daß** man andererseits oberhalb dieses weichen Bands (6) ein steifes tiefgezogenes Blech (7) mit einem Loch für das Hindurchführen des Gewindestifts (4) aufbringt und man auf diesem Gewindestift (4) das vorgenannte sichtbare Stützelement (5) befestigt.

2. Verfahren zum Installieren einer Befestigungsvorrichtung (1) gemäß Anspruch 1, **dadurch gekennzeichnet, daß** man das steife Blech (7) preßt, um einen Kegelstumpf (8) zu formen, der zum Gewindestab (4) zentrisch ist.

3. Verfahren zum Installieren einer Befestigungsvorrichtung (1) gemäß einem der Ansprüche 1 oder 2, **dadurch gekennzeichnet, daß** man das steife Blech (7) so befestigt, daß es nur mit dem Gewindestift (4) fest verbunden ist, aber gegenüber dem Dachstuhl mechanisch frei ist.

4. Vorrichtung (1) zum Befestigen einer Photovoltaik-Platte (P), die auf einem Dach, das aus Dachdeckteilen (2) mit teilweiser Überdeckung gebildet ist, installiert ist, wobei die Vorrichtung eine Trägerplatine (3) aufweist, deren nach oben gerichtete Seite einen zu dieser Trägerplatine (3) im Wesentlichen senkrechten Gewindestift (4) und mindestens ein Dichtungsband (6) von hinreichender Größe, um ein teilweises Überdecken mit den anliegenden Dachdeckteilen (2) zu ermöglichen, aufweist, wobei die Vorrichtung **dadurch gekennzeichnet ist, daß** sie ein steifes tiefgezogenes Blech (7) aufweist, das nur am Gewindestift (4) befestigt ist, um gegenüber dem Dachstuhl mechanisch frei zu sein, und daß an dem besagten Gewindestab (4), an dessen Ende, ein Stützelement (5) für die Photovoltaik-Platte (P) befestigt ist.

5. Befestigungsvorrichtung (1) gemäß Anspruch 4, **dadurch gekennzeichnet, daß** die sichtbare Seite (7A) des steifen Blechs (7) an dessen oberem Rand und an dessen seitlichen Rändern einen Wulst oder eine Rippe (10) aufweist.

6. Befestigungsvorrichtung (1) gemäß Anspruch 4, **dadurch gekennzeichnet, daß** das steife Blech (7) auf seiner sichtbaren Seite (7A) eine kegelstumpfartige Form (8) aufweist.

7. Befestigungsvorrichtung (1) gemäß Anspruch 4, **dadurch gekennzeichnet, daß** das steife Blech (7) auf dem Gewindestift (4) mit Festlegungsmitteln wie Muttern und Dichtungen/Beilagscheiben befestigt ist, die es mit dem Gewindestift (4) verbinden und gegenüber dem Dachstuhl mechanisch frei lassen.

8. Befestigungsvorrichtung (1) gemäß Anspruch 4, **dadurch gekennzeichnet, daß** sie ein rohrförmiges Zwischenstück (9) aufweist, das dazu bestimmt ist, für das steife Blech (7) auf dem Gewindestab (4) ein Auflager zu schaffen.

## Claims

1. A method for installing a fastening device (1) for fastening a photovoltaic panel (P) above a roof of the type formed of partially-overlapping cover parts (2) comprising a first step consisting in removing a cover part for access to a frame and a second step consisting in fastening on the frame a plate (3) for supporting a socalled offset body (4) on which appears a bearing element (5) visible above the cover and used for the fastening of the photovoltaic panel (P), said method being such that the support plate (3) is provided, having on its side facing upwards a threaded rod (4) substantially normal to this support plate (3), and, after having fastened the support plate (3) on the frame, on the one hand, at least one flexible seal strip (6) is applied on the uncovered surface, making the overlapping of the roof along the two axes, said method being **characterized in that**, on the other hand, above this flexible strip (6) is applied a stamped rigid sheet (7) having a hole for the passage of the threaded rod (4) and on this threaded rod (4) is fastened the above-mentioned visible bearing element (5).

2. The method for installing a fastening device (1) according to claim 1, **characterized in that** the rigid sheet (7) is stamped to form a truncated cone (8) that is centred on the threaded rod (4).

3. The method for installing a fastening device (1) according to any one of claims 1 or 2, **characterized in that** the rigid sheet (7) is fastened in such a way as to be attached only to the threaded rod (4) and to be mechanically free with respect to the frame.

4. A device (1) for fastening a photovoltaic panel (P) that is installed above a roof with partially-overlapping cover parts (2), the device comprising a support plate (3) whose side facing upwards has a threaded rod (4) substantially normal to this support plate (3), at least one seal strip (6) of sufficient extent to allow a partial overlapping with the adjacent covering elements (2), the device being **characterized in that** it comprises a stamped rigid sheet (7) fastened only to said threaded rod (4) to be mechanically free from the frame, and on which threaded rod (4) is fastened, at the end thereof, a bearing element (5) for said photovoltaic panel (P).

5. The fastening device (1) according to claim 4, **characterized in that** the exposed side (7A) of the rigid sheet (7) has, on its upper edge and its two lateral edges, an over-thickness or rib (10).

6. The fastening device (1) according to claim 4, **characterized in that** the rigid sheet (7) has, on its exposed side (7A), a truncated cone shape (8).

7. The fastening device (1) according to claim 4, **characterized in that** the rigid sheet (7) is fastened to the threaded rod (4) by immobilisation means such as nuts and gaskets/washers in such a way that it is attached to the threaded rod (4) and mechanically free from the frame.

8. The fastening device (1) according to claim 4, **characterized in that** it comprises a tubular spacer (9) intended to create a bearing for the rigid sheet (7) on the threaded rod (4).
